## Europäisches Patentamt
## European Patent Office
## Office européen des brevets

(19)

(11) Numéro de publication: **0 082 779**
**B1**

(12) # FASCICULE DE BREVET EUROPÉEN

(45) Date de publication du fascicule du brevet:
**23.07.86**

(51) Int. Cl.⁴: **G 01 V 3/26,** G 01 S 11/00

(21) Numéro de dépôt: **82402320.4**

(22) Date de dépôt: **17.12.82**

(54) **Dispositif de mesure de distance entre deux points d'un massif.**

(30) Priorité: **18.12.81 FR 8123746**

(43) Date de publication de la demande:
**29.06.83 Bulletin 83/26**

(45) Mention de la délivrance du brevet:
**23.07.86 Bulletin 86/30**

(84) Etats contractants désignés:
**AT BE CH DE FR GB IT LI LU NL SE**

(56) Documents cité:
**US-A-3 440 523**
**US-A-3 745 446**
**US-A-3 900 878**
**US-A-4 054 881**

(73) Titulaire: **ETAT FRANCAIS représenté par Le Ministère de l'Urbanisme et du Logement LABORATOIRE CENTRAL DES PONTS ET CHAUSSEES, 58 boulevard Lefebvre, F-75732 Paris Cedex 15 (FR)**

(72) Inventeur: **Marignier, Jacques René, 43, rue de Corval, F-76240 Mesnol- Esnard (FR)**
Inventeur: **Quibel, Alain Jean, 6, rue des Frères Lumiere, F-76800 Saint Etienne du Rouvray (FR)**
Inventeur: **Lebel, Jean- François Guy, rue Gosselin La Londe, F-76500 Elbeuf (FR)**
Inventeur: **Froumentin, Michel Henri, 9, rue Parmentier, F-76100 Rouen (FR)**

(74) Mandataire: **Joly, Jean- Jacques, CABINET BEAU DE LOMENIE 55, rue d'Amsterdam, F-75008 Paris (FR)**

LIBER, STOCKHOLM 1986

# 0 082 779

## Description

La présente invention a pour objet la mesure de distance entre deux points d'un massif en utilisant la propagation d'ondes électromagnétiques.

Pour la mesure de certaines caractéristiques d'un massif, c'est-à-dire d'un sol ou d'un milieu semblable tel qu'un remblai on peut utiliser des appareils de mesure disposés à l'intérieur du massif, notamment dans des tubes de réservation mis en place dans des forages réalisés dans le massif. Il est nécessaire de connaître la distance entre les emplacements des appareils dans les forages. Une mesure en surface ne peut apporter la précision souhaitée en raison de l'inévitable erreur de parallélisme entre les forages.

Aussi, la présente invention a pour but de permettre une mesure précise, même à une profondeur assez importante, entre un premier et un second point situés respectivement dans un premier et un second forage réalisés dans un massif. Par là même, la présente invention a aussi pour but de permettre le contrôle du parallélisme entre deux forages réalisés dans un massif.

Le document US-A-4 054 881 décrit un dispositif qui correspond au préambule de la revendication 1.

Le dispositif selon l'invention est exposé dans la revendication 1. Des formes de réalisation particulièreés sont exposées dans les revendications dépendentes 2 à 4.

D'autres particularités et avantages du procédé et du dispositif conformes à l'invention ressortiront à la lecture de la description faite ci-après, à titre indicatif mais non limitatif, en référence aux dessins annexés sur lesquels:

- la figure 1 est une vue illustrant très schématiquement le dispositif de mesure selon l'invention,
- la figure 2 illustre les variations de l'écart relatif des résultats obtenus dans différents matériaux par rapport aux résultats obtenus dans l'air, en fonction de la fréquence du courant fourni à la bobine émettrice du dispositif de la figure 1,
- la figure 3 illustre les relations entre la distance calculée et la distance réelle en fonction des matériaux dans lesquels les mesures sont effectuées, et
- la figure 4 illustre plus en détail un mode particulier de réalisation de la suspension des bobines réceptrices du dispositif de la figure 1.

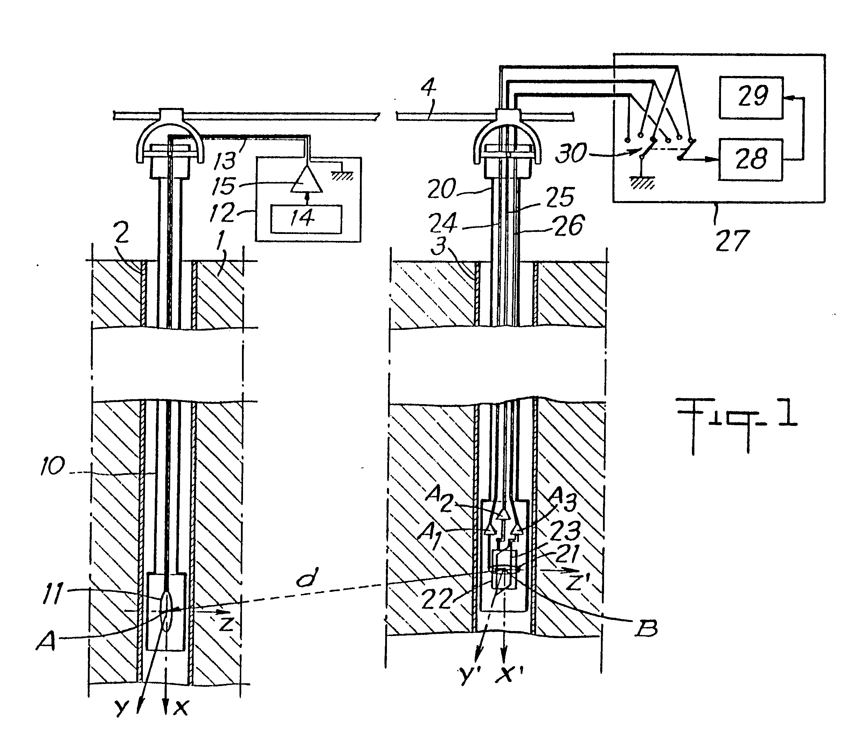

Le dispositif représenté sur la figure 1 est destiné à mesurer la distance entre deux points A et B d'un massif 1, par exemple un sol, en utilisant des ondes électromagnétiques. Les points A et B sont situés à une certaine profondeur et sont accessibles depuis la surface par des tubes 2, 3 mis en place dans le sol par forage ou tubage à l'avancement avec leurs axes sensiblement parallèles. Ces tubes constituent par exemple des réservations pour le logement de sondes de mesure.

Une tige creuse 10 est mise en place dans le tube 2. A son extrémité inférieure, elle contient une bobine émettrice 11. La liaison entre la bobine 11 et la tige 10 est réalisée au moyen d'une articulation à cardan présentant deux axes de pivotement orthogonaux. Lorsque la tige 10 est verticale, l'un de ces axes est horizontal et confondu avec l'axe Z de la bobine, l'autre axe de pivotement étant également horizontal. A son extrémité supérieure, la tige 10 est suspendue à une barre horizontale 4 par l'intermédiaire d'une deuxiéme articulation à cardan dont les axes sont parallèles à ceux de l'articulation prévue à l'extrémité inférieure, et qui peut coulisser le long de la barre 4.

Grâce à cette suspension pendulaire à cardans, et un coulissement possible le long de la barre 4, la tige 10 peut être enfoncée dans le tube 2, même si ce dernier n'est pas exactement vertical, et tout système de référence lié à la bobine 11 reste constamment parallèle à lui-méme, par exemple un système de coordonnées tri-orthogonal X, Y, Z centré en A, l'axe X étant normalement vertical, et les axes Y, Z étant normalement horizontaux, avec l'axe Z confondu avec celui de la bobine.

Une seconde tige creuse 20 est mise en place dans le tube 3. A son extrémité inférieure elle contient un ensemble récepteur constitué de trois bobines réceptrices 21, 22, 23 d'axes différents les uns des autres et de positions relatives fixes. Ces bobines ont par exemple des axes mutuellement orthogonaux. L'ensemble des bobines réceptrices est monté à l'extrémité inférieure de la tige 20 par l'intermédiaire d'une articulation à cardan de sorte que, lorsque la tige 20 est verticale, les deux axes orthogonaux de cette articulation soient horizontaux et parallèles à ou confondus avec respectivement les axes des bobines 22 et 23. A son extrémité supérieure, la tige 20, comme la tige 10 est suspendue à la barre horizontale 4 par l'intermédiaire d'une articulation à cardan dont les axes sont parallèles à ceux de l'articulation prévue à l'extrémité inférieure et qui peut coulisser le long de la barre 4.

Ainsi, la tige 20 peut être enfoncée dans le tube 3, même si ce dernier n'est pas exactement vertical, et tout système de référence lié à l'ensemble des bobines réceptrices 21, 22, 23 reste constamment parallèle à lui-même, par exemple le système de coordonnées tri-orthogonal X', Y', Z' centré en B dont les axes sont respectivement confondus avec ou parallèles à ceux des bobines 21, 22, 23 selon que celles-ci sont ou ne sont pas concentriques.

De préférence, les axes de pivotement des articulations à cardan reliant les tiges 10 et 20 à la barre sont parallèles. Ainsi, les systèmes de référence X, Y, Z et X', Y', Z' sont constamment parallèles même si les forages contenant les tubes 2 et 3 ne sont pas parallèles entre eux. Comme on le verra plus loin, ceci est exact pour autant que la bobine émettrice ou l'ensemble de bobines réceptrices peut se positionner librement, c'est-à-dire sans venir en butée contre une partie de la tige 10 ou 20 malgré l'inclinaison de celle-ci.

Les tubes 2, 3 et les tiges 10 et 20 sont des éléments tubulaires en matériau non conducteur de l'électricité, par exemple en une matière plastique telle que P.V.C. Les tiges 10 et 20 ont un diamètre réduit entre leur extrémité contenant l'émetteur ou le récepteur et leur extrémité reliée à la base 4 de manière à pouvoir être mises en place

2

..ns difficultés dans les tubes 2 et 3 même si les forages ne sont pas exactement rectilignes.

La bobine émettrice 11 est alimentée en courant alternatif au moyen d'un circuit 12 disposé en surface et auquel elle est reliée par un câble blindé 13. Le circuit 12 comprend un générateur 14 de signaux de fréquence donnée dont la sortie est reliée au câble 13 par l'intermédiaire d'un amplificateur 15.

Les tensions induites dans les bobines réceptrices 21, 22, 23 par le champ électromagnétique engendré par la bobine 11, sont acheminées en surface au moyen de lignes bifilaires 24, 25, 26 jusqu'à un circuit de réception 27. De préférence, ces tensions sont amplifiées au moyen d'amplificateurs identiques A1, A2, A3 directement branchés en sortie des bobines 21, 22, 23. Le circuit de réception 27 comporte un filtre passe-bande 28, dont la bande passante est centrée sur la fréquence du signal produit par le générateur 14, et un voltmètre 29 destiné à mesurer la tension en sortie du filtre 28.

L'entrée du filtre 28 peut être sélectivement connectée à chacune des lignes bifilaires 24, 25 et 26 au moyen d'un commutateur 30 pour mesurer des valeurs $e_x$, $e_y$, $e_z$ représentant les tensions induites dans les bobines 21, 22 et 23.

Pour une fréquence et une amplitude déterminées du courant alimentant la bobine 11 et pour des configurations propres et relatives déterminées de la bobine émettrice 11 et de l'ensemble de bobines réceptrices 21, 22, 23, il existe une relation biunivoque entre les valeurs $e_x$, $e_y$ et $e_z$ mesurées et la distance d séparant les points A et B. Cette relation peut être trouvée par le calcul ou au moyen d'abaques après étalonnage du dispositif.

A titre indicatif, on peut exprimer les tensions $e_x$, $e_y$, $e_z$ sous la forme $e_x = A_x\Psi_x$, $e_y = A_y\Psi_y$, $e_z = A_z\Psi_z$. $A_x$, $A_y$ et $A_z$ sont des coefficients fixes fonctions des caractéristiques de l'appareillage utilisé, et de l'amplitude et de la fréquence du courant alimentant la bobine 11. $\Psi_x$, $\Psi_y$ et $\Psi_z$ sont des fonctions des coordonnées x, y, z du point B dans le système de référence X, Y, Z centré en A. Le calcul montre que l'on peut exprimer la distance d sous la forme

$$d = \left[ \frac{3t}{(1 + t^2)\sqrt{\Psi_x^2 + \Psi_y^2}} \right]^{1/3} , \quad \text{avec}$$

$$t = \frac{3 + \sqrt{9 + 8\dfrac{\Psi_x^2 + \Psi_y^2}{\Psi_z^2}}}{4\dfrac{\sqrt{\Psi_x^2 + \Psi_y^2}}{\Psi_z}}$$

Sachant que $\quad \Psi_x = \dfrac{e_x}{A_x}$, $\quad \Psi_y = \dfrac{e_y}{A_y}$ et $\Psi_z = \dfrac{e_z}{A_z}$,

la connaissance de $e_x$, $e_y$ et $e_z$ permet de calculer d, les coefficients $A_x$, A et A étant déterminés par étalonnage. Par exemple, pour déterminer $A_z$, on place la[1] bobine 11 et l'ensemble des bobines 21, 22, 23 à une distance D connue telle que les coordonnées x, y et z soient respectivement égales à 0, 0 et D. Si l'on désigne par $e_z$ la valeur mesurée par le voltmètre 29 de la tension recueillie aux bornes de la bobine 23, l'on a

$$A_z = \frac{e_z}{2D^{-3}}$$

Les valeurs de $A_x$ et A peuvent être déterminées en choisissant d'autres configurations d'étalonnage.

Des essais ont été effectués pour mettre en évidence l'influence de la fréquence du courant alimentant la bobine émettrice. Pour ces essais, la bobine émettrice et les bobines réceptrices étaient logées dans des tubes de verre parallèles distants d'environ 50 cm et disposés dans un bac pouvant être rempli de tout matériau désiré. Pour chaque matériau utilisé, des mesures ont été effectuées avec des fréquences de 5, 10, 20, 50 et 100 kHz.

Une première série de mesures a été effectuée dans l'air suivant le mode opératoire décrit plus haut, en relevant, pour chaque fréquence, la valeur $e_{za}$ de la tension induite dans la bobine réceptrice 23. Ensuite, différents matériaux ont été testés aux mêmes fréquences et l'on a calculé, à chaque fois la valeur

$$\frac{\Delta e_z}{e_{za}} \quad , \quad \Delta e_z$$

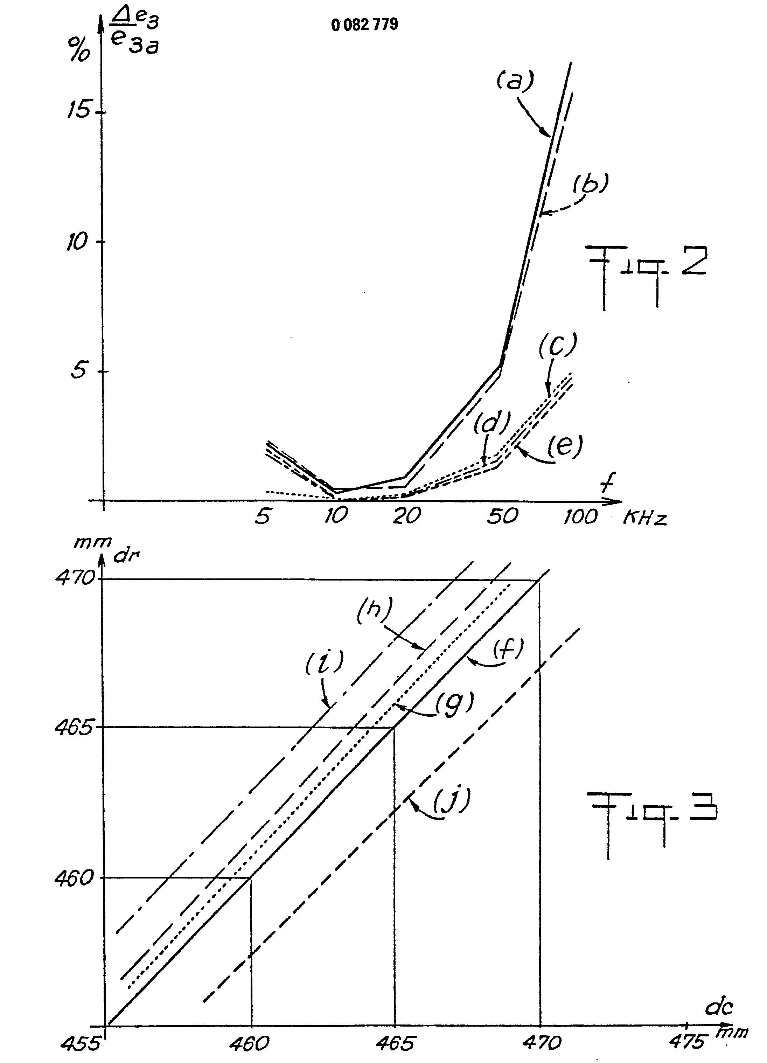

étant la différence entre la valeur $e_{zm}$ de la tension induite dans la bobine 23 avec le matériau testé et celle $e_{za}$ mesurée précédemment dans l'air. Les courbes de la figure 2 montrent les valeurs obtenues de

$$\frac{\Delta e_z}{e_{za}}$$

(en %) pour les matériaux suivants:
(a) phosphogypse ($CaSO4$, $2H2O$),
(b) eau
(c) sable sec (granulométrie de = à 0,5 mm et teneur en eau inférieur à 0,1 %)
(d) grave (granulométrie de 0 à 20 mm et teneur en eau d'environ 5 %), et
(e) sable humide (granulométrie de 0 à 5 mm et teneur en eau d'environ 6 %).

Il ressort à l'evidence de la figure 2 que la fréquence d'émission doit être plutôt inférieure à 50 kHz et même inférieure à 20 kHz pour certaines matériaux (phosphogypse et eau). Une détérioration des résultats est également observée en-deça de 10 kHz. En outre, plus la fréquence décroit et plus le risque d'échauffment et de détérioration de la bobine émettrice est éléve. Pour ces différentes raisons, la fréquence d'émission doit être choisie dans l'intervalle 10-50 kHz, et, de préférence, dans l'intervalle 10-20 kHz. A titre d'exemple, une fréquence de 15 kHz convient très bien, le filtre passe-bande 28 en réception étant réglé à 14 kHz de fréquence de coupure basse et à 16 kHz de fréquence de coupure haute.

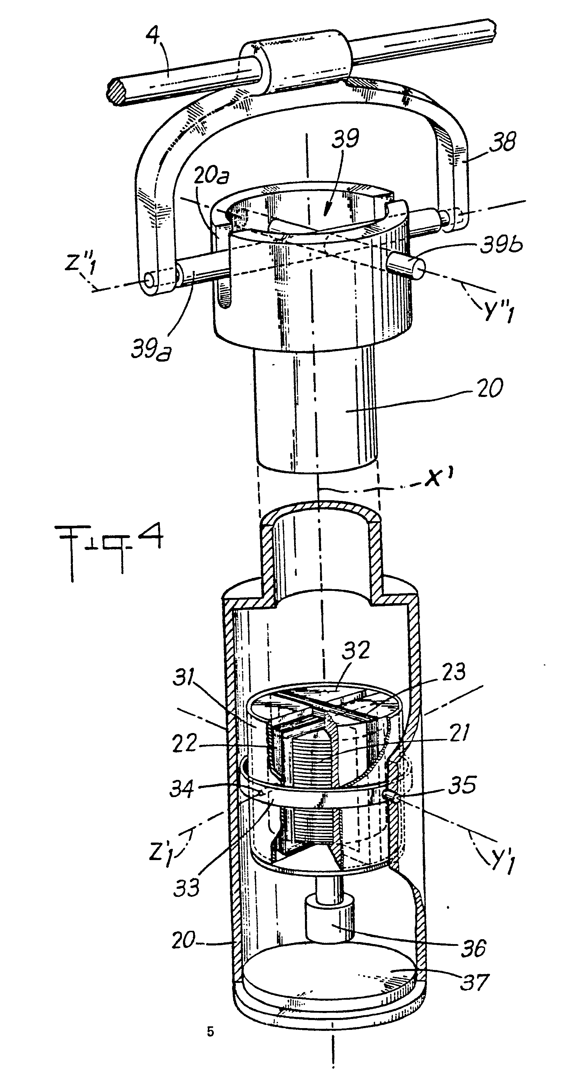

Comme indiqué plus haut, les constantes $A_x$, $A_y$, $A_z$ sont déterminées par étalonnage de l'appareil. Cet étalonage étant effectué dans l'air, plusieurs essais ont été réalisés pour déterminer l'influence des matériaux sur la précision de la mesure lorsque ces même constantes sont utilisées pour le calcul de la distance quel que soit le matériau. La figure 3 illustre les relations mesurées entre la distance réelle $d_r$ et la distance calculée $d_c$ pour une distance variant de 455 à 470 mm et pour les matériaux suivants:
(f) air
(g) sable sec
(h) eau
(i) sable humide
(j) laitier

On constate que l'erreur relative est, en valeur absolue au plus égale à environ 0,5 %.

La connaissance de l'influence du matériau sur la différence entre valeur calculée et valeur réelle permet, le cas échéant, de prédéterminer la correction à apporter à la valeur mesurée selon le matériau au sein duquel la mesure est effectuée.

La figure 4 illustre un mode particulier de réalisation de la suspension des bobines réceptrices et de la tige 20 (les connexions électriques ne sont pas représentées).

Les bobines 21, 22, 23, sont logées à l'intérieur d'un boîtier cylindriques mobile 31 où elles sont maintenues en place au moyen de cales 32. La bobine 21 est cylindrique d'axe vertical X'. Elle est entourée par la bobine 22 rectangulaire d'axe horizontale, elle même entourée par la bobine 23 rectangulaire d'axe horizontal perpendiculaire à ceux des bobines 21, 22. Lorsque le tube 20 occupe une position vertical, les axes de ce tube et du boîtier sont sensiblement confondus avec l'axe de la bobine 21, de même que l'axe d'une bague intermédiaire 33 entourant le boîtier 31. La liaison entre le boîtier 31 et la bague 33 est réalisée au moyen de deux pivots 34 diamétralement opposés et alignés suivant un premier axe de pivotement Z'1 sensiblement confondu avec l'axe de la bobine 23. La bague intermédiaire 33 est reliée au tube 20 par deux pivots 35 diamétralement opposés et alignés suivant un second axe de pivotement Y'1 perpendiculaire à Z'1 et normalement horizontal et sensiblement confondu avec l'axe de la bobine 22. Ainsi, la bague 33 et les pivots 34, 35 forment une première articulation à cardan autour des axes normalement horizontaux Z'1 et Y'1.

Une masse de rappel 36 est fixée sous le boîtier 31 de sorte que l'axe X' reste constamment vertical même si le forage dans lequel la tige 20 est introduite est incliné par rapport à la verticale. L'orientation verticale de X' est conservée tant que cette inclinaison du forage reste inférieure à une valeur limite pour laquelle le boîtier 31 vient en butée contre la bague 33 ou la tige 20. Cette valeur limite peut être relativement peu élevée, par exemple 10° à 20°. Il est en effet, d'une part, peu probable que l'inclinaison du forage soit supérieure à de telles valeurs et, d'autre part souhaitable de disposer de bobines réceptrices de dimensions aussi grandes que possible.

Le boîtier 31, la bague 33 et la masse de rappel 36 sont situées à l'intérieur de la tige 20, à proximité de son extrémité inférieure. Celle-ci est obturée de façon étanche par un bouchon 37.

A proximité de son extrémité supérieure, la tige 20 est reliée à un étrier 38 par l'intermédiaire d'une articulation à cardan 39. Celle-ci est formée par un croisillon dont une branche 39a alignée suivant un axe Z''1 parallèle à l'axe Z'1 est montée pivotante à ses extrémités dans des trous formés dans la paroi de la tige 20. L'autre branche 39b

4

du croisillon 39 est alignée suivant un axe Y''$_1$ parallèle à l'axe Y'$_1$, passe dans des lumières 20a de la tige 20 et est montée pivotante à ses extrémités sur les branches de l'étrier 38. De cette manière est formée une seconde articulation à cardan d'axes parallèles à ceux de celle située à l'autre extrémité de la tige 20. L'étrier 38 est monté coulissant sur la barre 4.

Le montage de la bobine émettrice 11 dans la tige 10 et la suspension de celle-ci à la barre sont par exemple identiques au montage des bobines réceptrices dans la tige 20 et à la suspension de celle-ci à la barre 4.

Lorsqu'une mesure doit être effectuée, les tubes 2 et 3 étant en place, la barre 4 portant les tiges 10 et 20 est amenée au-dessus des tubes 2 et 3, puis les tiges 10 et 20 sont introduites dans les tubes et la barre horizontale 4 est descendue progressivement jusqu'à atteindre la profondeur souhaitée. Grâce aux suspensions pendulaires à double cardan, la bobine émettrice, d'une part, et l'ensemble des bobines réceptrices, d'autre part, conservent des orientations respectives invariables.

Lorsque la distance à mesurer se situe dans une plage allant de 5 à 50 fois ou, de préférence, de 10 à 20 fois le diamètre (ou côté) moyen des bobines utilisées, une précision satisfaisante est obtenue avec un étalonnage réalisé dans cette plage. Dans le cas de distances plus grandes, l'éloignement entre l'émetteur et le récepteur fait que les signaux reçus sont faibles et plus susceptibles d'être perturbés, d'où une perte irrémédiable de précision. Dans le cas de distances plus courtes, la proximité entre bobine émettrice et bobines réceptrices crée des conditions particulières qui nécessitent des ré-étalonnages.

Bien entendu, différentes modifications ou adjonctions pourront être apportées au mode de réalisation décrit plus haut sans pour cela sortir du cadre de protection défini par les revendications annexées. Ainsi, les trois bobines réceptrices peuvent ne pas être concentriques mais, par exemple superposées, et peuvent avoir des axes non nécessairement mutuellement orthogonaux tout en faisant entre eux des angles fixes non nuls.

En outre, l'émetteur et le récepteur pourront être réalisés sous forme d'éléments autres que des bobines. Par exemple, le récepteur pourra être constitué ensemble de trois unités détectrices telles que par un des dispositifs utilisant des sondes à effet Hall, ces unités produisant des signaux de sortie dont l'amplitude est fonction de l'intensité du champ magnétique auxquelles elles sont soumises et de l'orientation des lignes de force de ce champ par rapport à des axes particuliers liés aux unités.

## Revendications

1. Dispositif utilisant la propagation d'ondes électromagnétiques pour mesurer la distance entre un premier point (A) et un second point (B), comportant un émetteur (11), un récepteur avec au moins un ensemble de trois unités réceptrices (21, 22, 23) de positions fixes l'une par rapport à l'autre, chaque unité réceptrice délivrant un signal de sortie dont l'amplitude est fonction de l'intensité du champ magnétique environnant et de l'orientation de celui-ci par rapport à un axe particulier lié au récepteur, les axes des unités réceptrices ayant des directions différentes les unes des autres, un circuit de mesure (27) étant connecté aux unités réceptrices (21, 22, 23) pour fournir une valeur représentative de l'amplitude du signal de sortie de chacune d'entre elles, et des moyens (14, 15) destinés à commander l'émetteur (11) pour qu'il engendre lesdites ondes électromagnétiques à une fréquence donnée,
caractérisé par le fait que, pour mesurer la distance entre le premier point (A) et le second point (B) situés respectivement dans un premier forage et un second forage réalisés dans un massif, le dispositif comprend un agencement de deux tiges rigides articulées (10, 20), destinées à être introduites dans lesdits forages, auxquelles l'émetteur (11), comportant une unique unité émettrice, et le récepteur, comportant les trois unités réceptrices (21, 22, 23), sont suspendus de façon pendulaire de telle sorte qu'ils prennent par gravité une même orientation par rapport à la verticale et qu'ils soient couplés entre eux en rotation, toute rotation mutuelle autour de la direction verticale étant interdite, ladite distance étant déterminée à partir de ladite valeur représentative de l'amplitude du signal de sortie de chacune des unités réceptrice (21, 22, 23).

2. Dispositif selon la revendication 1, caractérisé par le fait que les deux tiges (10, 20) reliées par des articulations à cardan d'une part, à l'une de leurs extrémités, à un organe support (4) commun et d'autre part, à leur autre extrémité, respectivement à l'émetteur (11) et au récepteur dont les trois unités réceptrices (21, 22, 23) ont leurs axes parallèles aux directions d'un trièdre trirectangle, lequel conserve une orientation fixe par rapport à un trièdre trirectangle lié à l'unité émettrice de l'émetteur.

3. Dispositif selon la revendication 2, caractérisé par le fait que l'organe support (4) est constitué par une barre le long de laquelle peuvent coulisser les articulations de liaison des tiges (10, 20).

4. Dispositif selon l'une quelconque des revendications 1 à 3, caractérisé par le fait que la fréquence des ondes électromagnétiques est comprise entre 10 et 50 kHz, de préférence entre 10 et 20 kHz.

## Patentansprüche

1. Vorrichtung mit Verwendung von elektromagnetischen Wellen zum Messen des Abstands zwischen einem ersten punkt (A) und einem zweiten punkt (B), enthaltend einen Sender (11), einen Empfänger mit wenigstens einer Anordnung von drei Empfangseinheiten (21, 22, 23) mit gegeneinander festen positionen, wobei jede Empfangseinheit ein Ausgangssignal liefert, dessen Amplitude abhängig ist von der Intensität des umgebenden Magnetfelds und von dessen Orientierung gegenüber einer mit dem Empfänger verbundenen besonderen Achse, wobei die Achsen der Empfangseinheiten zueinander unterschiedliche Richtungen haben, wobei eine Meßschaltung (27) mit den Empfangseinheiten (21, 22, 23) verbunden ist, um einen Wert zu liefern, der die Amplitude des Ausgangssignals von jeder unter ihnen wiedergibt, und Mittel (14, 15), die zur Steuerung des Senders (11) bestimmt sind, damit er die elektromagnetischen Wellen mit einer gegebenen Frequenz erzeugt, dadurch <u>gekennzeichnet</u>, daß die Vorrichtung zum Messen des Abstands zwischen dem ersten Punkt (A) und dem zweiten punkt (B), die sich in einer ersten Bohrung bzw. in einer zweiten Bohrung in einem Massiv befinden, eine Anordnung von zwei angelenkten starren Stangen (10, 20) aufweist, die in die genannten Bohrungen eingeführt werden sollen und an denen der Sender (11) mit einer einzigen Sendeeinheit und der Empfänger mit drei Empfangseinheiten (21, 22, 23) derart pendelnd aufgehängt sind, daß sie durch die Schwerkraft dieselbe Orientierung gegenüber der Senkrechten einnehmen und untereinander bezüglich Drehung miteinander gekoppelt sind, wobei jede gegenseitige Drehung um die senkrechte Richtung untersagt ist, wobei der genannte Abstand aus dem genannten Wert bestimmt wird, der die Amplitude des Ausgangssignals jeder der Empfangseinheiten (21, 22, 23) wiedergibt.

2. Vorrichtung nach Anspruch 1, dadurch gekennzeichnet, daß die beiden Stangen (10, 20) verbunden sind einerseits an einem ihrer Enden über Kardangelenke mit einem gemeinsamen Tragorgan (4) und andererseits an ihrem anderen Ende mit dem Sender (11) bzw. mit dem Empfänger, bei dem die Achsen der drei Empfangseinheiten (21, 22, 23) zu den Richtungen eines Trieders mit drei rechten Winkeln parallel sind, das eine feste Orientierung gegenüber einem Trieder mit drei rechten Winkeln beibehält, das mit der Sendeeinheit des Senders verbunden ist.

3. Vorrichtung nach Anspruch 2, dadurch gekennzeichnet, daß das Tragorgan (4) aus einem Stab besteht, längs welchem die Verbindungsgelenke der Stangen (10, 20) gleiten können.

4. Vorrichtung nach einem der Ansprüche 1 bis 3, dadurch gekennzeichnet, daß die Frequenz der elektromagnetischen Wellen 10 bis 50 kHz, vorzugsweise 10 bis 20 kHz, beträgt.

## Claims

1. Device using the propagation of electromagnetic waves for measuring the distance between a first point (A) and a second point (B), comprising a transmitter (11), a reciever having at least an assembly of three receiving units (21, 22, 23) of fixed positions one with respect to the other, each receiving unit delivering an output signal, the amplitude of which is function of the intensity of the surrounding magnetic field and of the orientation thereof with respect to a particular axis linked to the receiver, the axes of the receiving units having different directions in with respect to the other, a measuring circuit (27) being connected to the receiving units (21, 22, 23) to supply a value representative of the amplitude of the output signal of each unit, and means (14, 15) for controlling the transmitter (11) so that it produces said electromagnetic waves at a given frequency, characterized by the fact that, in order to measuring the distance between the first point (A) and the second point (B) situated respectively in a first bore and a second bore made ina massif, the device comprises an arrangement of two rigid articulated rods (10, 20) designed to be introduced in said bores, to which rods are suspended in pendulum fashion the transmitter (11), comprising only one transmitting unit, and the receiver, comprising the trhree receiving units (21, 22, 23) so that they adopt by gravity the same orientation with respect to the vertical, and so that they are coupled together in rotation, any mutual rotation around the vertical direction being prevented, said distance being determined from said value representative of the amplitude of the output signal of each receiving unit (21, 22, 23)

2. Device according to claim 1, characterized by the fact that the two rods (10, 20) connected by universal joints on the one hand, by one of their ends, to a common supporting member (4) and on the other hand, by their other end, respectively to the transmitter (11) and to the receiver, of which the three receiving units (21, 22, 23) have their axes parallel to the directions of a trirectangular trihedron, which latter keeps a fixed orientation with respect to a trirectangular trihedron linked to the transmitting unit of the transmitter.

3. Device according to claim 2, characterized by the fact that the supporting member (4) is constituted by a bar along which can slide connecting joints of rods (10, 20).

4. Device according to any one of claims 1 to 3, characterized by the fact that the frequency of the electromagnetic waves is between 10 and 50 kHz, and preferably between 10 and 20 kHz.

Fig. 1

0 082 779

Fig. 2

Fig. 3

0 082 779

Fig. 4